# FASCICULE DE BREVET EUROPEEN

(11) **EP 1 592 600 B1**
(45) Date de publication et mention de la délivrance du brevet: **28.02.2007**
(21) Numéro de dépôt: 04703824.5
(22) Date de dépôt: 21.01.2004
(51) Int. Cl.: B62D 7/12, B62D 6/00, B62D 5/12

(54) **PROCEDE DE COMMANDE DE LA DIRECTION D UN VEHICULE AUTOMOBILE**
VERFAHREN ZUR STEUERUNG DER RICHTUNG EINES KRAFTFAHRZEUGS
METHOD FOR CONTROLLING THE DIRECTION OF A MOTOR VEHICLE

(30) Priorité: 11.02.2003 FR 0301592
(43) Date de publication de la demande: 09.11.2005
(73) Titulaire: RENAULT TRUCKS, 69800 St Priest (FR)
(72) Inventeur: DECHAMP, François, F-71250 Cluny (FR); RIESER, Eric, F-69008 Lyon (FR)
(74) Mandataire: Vuillermoz, Bruno
(86) Numéro de dépôt international: PCT/FR2004/050021
(87) Numéro de publication internationale: WO 2004/071848

(56) Documents cités:
- FR-A- 2 810 615
- US-A- 4 263 979
- US-A- 6 067 782
- US-A1- 2002 189 889

## Description

### Domaine technique

L'invention se rattache au domaine des systèmes de commande de direction équipant les véhicules automobiles, et notamment, mais non exclusivement, les véhicules industriels tels que les camions.

Elle concerne plus spécifiquement les systèmes de direction dans lesquels le braquage des roues n'est pas obtenu par une transmission mécanique mais par le biais d'un ou plusieurs dispositifs mettant en oeuvre des circuits hydrauliques, électro-hydrauliques ou électriques. Ce type de direction est connu sous l'appellation "steer by wire". L'invention vise plus spécifiquement un procédé de commande de direction au moyen de ce type de système, visant à conserver un certain contrôle de la direction, au moment où les dispositifs de commande présentent une défaillance.

### Techniques antérieures

De façon générale, les systèmes de direction "steer by wire" agissent sur l'angle de braquage des roues au moyen d'un ou plusieurs actionneurs commandés en fonction de la position angulaire du volant, voire d'un manipulateur se présentant sous la forme d'un manche ou d'un levier, ou de façon plus générale de tout organe de commande de la direction.

Ces signaux sont généralement traités par une unité de contrôle commande électronique. Cette unité de commande électronique pilote différents composants électriques ou électro-hydrauliques associés à un actionneur qui permet de faire varier l'angle de braquage de la roue. Il existe également des systèmes purement hydrauliques qui permettent également à partir de la rotation du volant de commander une modification de l'angle de braquage des roues.

Certains de ces systèmes, notamment ceux décrits par le Demandeur dans le document FR 2 810 615 comportent deux dispositifs distincts, chacun dédié à la commande de l'angle de braquage d'une roue. En pratique, ces véhicules comportent deux circuits hydrauliques associés chacun à un actionneur responsable du braquage d'une des roues. Chacun de ces circuits hydrauliques est commandé par une unité de contrôle commande spécifique. Ce type de direction présente un inconvénient majeur lorsqu'un des dispositifs indépendants présente une défaillance. En effet, il est alors nécessaire d'établir une liaison mécanique entre les deux roues pour que leurs angles de braquage soient insensiblement égaux, aux corrections de parallélisme près. Cette liaison mécanique fonctionnant en mode dégradé est particulièrement difficile à mettre en oeuvre.

Le problème que se propose de résoudre l'invention est celui de gérer la défaillance d'un des systèmes assurant la commande de braquage d'une des roues, et ce au moins pour permettre au conducteur de pouvoir contrôler la direction jusqu'à l'arrêt du véhicule. Or, les sources de défaillance de ces circuits de commande sont multiples, du fait du nombre important d'éléments mis en oeuvre. Outre les éventuelles pannes résultant d'une rupture mécanique, on peut principalement citer les défaillances dues à des problèmes survenant dans les composants hydrauliques ou électro-hydrauliques, mais surtout dans les unités de contrôle commande électronique.

D'un point de vue mécanique, les systèmes de direction comportent une articulation de la roue par rapport au châssis du véhicule se présentant sous la forme d'un pivot. Ce pivot n'est pas exactement vertical, mais très légèrement orienté vers l'avant et vers l'extérieur, respectivement selon un angle de chasse et un angle de pivot. De ce fait, lorsque le dispositif qui assure la variation de l'angle de braquage devient inactif, et laisse donc la roue s'orienter naturellement, celle-ci a tendance à s'orienter en se braquant vers l'intérieur. Ce braquage inopiné de la roue peut donc modifier la trajectoire et conduire à une perte de contrôle du véhicule.

Un autre problème que cherche à résoudre l'invention est celui d'éviter le braquage intempestif et incontrôlé de la roue en cas de défaillance du système de commande du braquage de cette roue.

### Exposé de l'invention

L'invention concerne donc un procédé de commande de direction d'un véhicule automobile, dans lequel l'angle de braquage de chaque roue est commandé indépendamment par un dispositif dédié à une roue. Chaque dispositif de commande du braquage d'une roue comporte un actionneur, une vanne by-pass, un distributeur, une unité de commande. Conformément à l'invention, le procédé de commande de direction se caractérise en ce qu'en cas de défaillance d'un des dispositifs de commande du braquage d'une des roues, on limite fortement, et de façon automatique la capacité de variation de l'angle de braquage de la roue considérée.

Autrement dit, lorsque l'on détecte que le dispositif de commande de braquage d'une roue n'est plus opérationnel, en ce sens qu'il n'est plus apte à imposer l'angle demandé par le conducteur, on empêche alors tout mouvement désordonné de la roue dont la commande n'est plus assurée.

Cette limitation de la capacité de variation d'angle de braquage peut s'obtenir par un blocage complet mais aussi quasi complet de l'angle de direction, c'est-à-dire la mise, des différents actionneurs intervenants, dans une configuration telle, qu'ils amortissent très fortement les mouvements de braquage de la roue.

En pratique, le blocage de l'angle de la roue considérée peut intervenir soit immédiatement après l'apparition de la défaillance, ou bien encore lorsque l'angle de braquage entre dans une plage prédéterminée dans laquelle on considère que les conditions de sécurité sont remplies pour que la trajectoire soit conservée jusqu'à l'arrêt du véhicule. En pratique, on pourra préférer que le blocage de l'angle de braquage se fasse pour une valeur d'angle de braquage nulle, correspondant à une trajectoire rectiligne, en ligne droite.

A titre d'exemple, le dispositif de commande peut comporter un actionneur hydraulique tel qu'un vérin. Dans ce cas, en cas de défaillance du dispositif de commande de braquage, on peut bloquer le piston du vérin en position fixe, en fermant les circuits d'alimentation du vérin. Dans ce cas, le blocage peut ne pas être total, mais on peut observer une légère fluctuation de cet angle de braquage, due aux fuites au sein du vérin, consécutives aux efforts importants engendrés par le positionnement de la roue dans une direction s'écartant légèrement de la trajectoire.

Dans une forme particulière de l'invention, on peut également assurer le maintien de la roue dans la direction de braquage souhaitée en appliquant un effort de freinage sur la roue défaillante. Cet effort de freinage compense la tendance naturelle de la roue, qui n'est plus guidée en direction, à braquer vers l'intérieur. On exerce donc un effort de freinage sur cette roue, de sorte que la réaction s'opposant à cet effort de freinage provoque un braquage de la roue libre vers l'extérieur. En d'autres termes, on exerce cet effort de freinage pour compenser le braquage naturel vers l'intérieur, ce qui permet de conserver une certaine maîtrise sur la direction de la roue associée au système défaillant, lorsque l'amortissement généré sur l'actionneur autorise un certain mouvement de la roue.

Cet effet consécutif à un freinage peut être employé de plusieurs façons. Ainsi, avant même de bloquer l'angle de braquage, il peut être utilisé pour ajuster le braquage à une valeur souhaitée. Ce freinage est ensuite interrompu, pour initier une phase de blocage (ou de fort amortissement) du braquage. Ce freinage spécifique peut également intervenir après une première phase de blocage, pour optimiser l'angle de braquage à une valeur qui a évolué. Dans ce cas, le blocage est interrompu quelques instants pour permettre à cet effort de freinage spécifique d'amener la roue dans une position de braquage correspondant à l'évolution de la trajectoire. Le blocage (ou le fort amortissement) est ensuite appliqué à nouveau.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est un schéma général synoptique montrant un exemple de réalisation d'un système de direction conforme à l'invention.
La figure 2 est une vue de côté de la roue droite directrice montrant l'inclinaison de l'avant du pivot de direction.
La figure 3 est une vue de dessus de la roue de la figure 2.
La figure 4 est une vue de face de la roue de la figure 2, montrant l'inclinaison vers l'extérieur du pivot de direction.

### Manière de réaliser l'invention

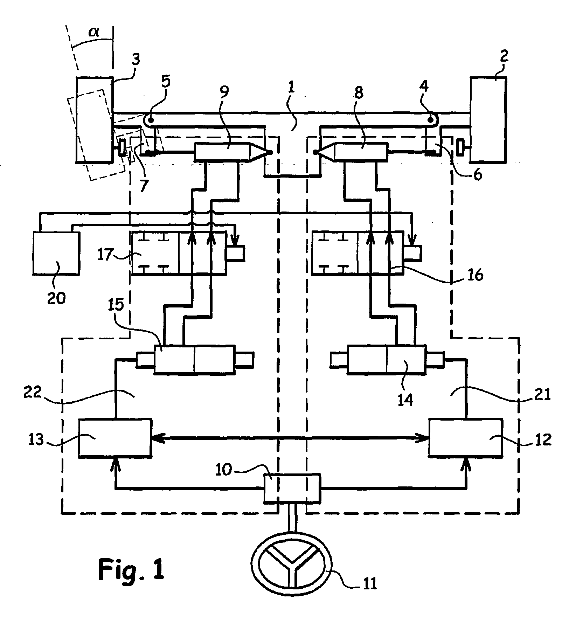

Comme déjà évoqué, l'invention concerne un procédé de commande de direction d'un véhicule automobile qui peut être réalisé de différentes manières, notamment selon le mode de réalisation exposé à la figure 1.

Ainsi, on observe à la figure 1 l'essieu (1) sur lequel sont montées les deux roues directrices (2, 3). Ces deux roues directrices (2, 3) sont articulées par rapport à l'essieu (1) au niveau des pivots de direction (4, 5).

Les bielles de direction (6, 7) sont reliées à deux actionneurs (8, 9), qui dans la forme illustrée, peuvent être des distributeurs hydrauliques mais qui pourraient être réalisés selon d'autres technologies, notamment électrique, sans sortir du cadre de l'invention.

La commande de chaque actionneur (8, 9) se fait de manière indépendante, à partir d'une information issue d'un capteur (10), et représentative de l'angle de rotation de l'organe de direction (11), qui dans la forme illustrée, est un volant.

Cette information angulaire est traitée par les unités de commande électronique (12, 13) qui est propre au dispositif de commande (21, 22) de braquage d'une des roues (2, 3). Ces unités de commande électroniques (12, 13) peuvent dialoguer et échanger un certain nombre d'informations, notamment pour le fonctionnement en mode dégradé.

Un véhicule comporte en général deux dispositifs (21, 22) de commande du braquage, comportant chacun une unité de commande électronique (12, 13) qui génère un signal électrique permettant de commander un distributeur hydraulique (14, 15), lui-même alimentant le vérin (8, 9) à travers une vanne de by-pass (16, 17).

Le fonctionnement de l'invention dépend notamment de la géométrie de l'articulation de la roue (2, 3) par rapport à l'essieu directeur (1), et notamment de l'inclinaison de l'axe du pivot d'articulation (4, 5).

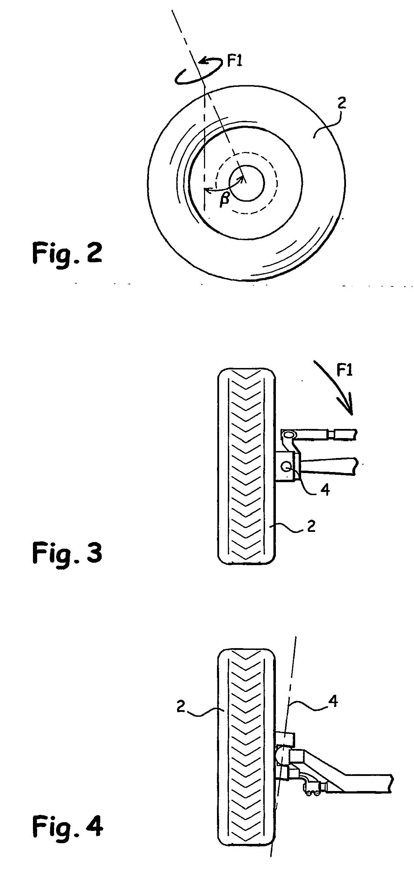

Plus précisément, et comme illustré à la figure 2, l'axe du pivot d'articulation (4) est incliné vers l'avant, selon un angle de chasse β mesuré par rapport à la verticale.

Comme illustré à la figure 4, l'axe du pivot d'articulation (4) est également incliné latéralement, selon un angle de pivot de roue. Il s'ensuit, comme illustré à la figure 3, que dans le cas où la roue (2) est libre, et ne suit donc plus les effets de la bielle de direction (6), elle a tendance naturellement à s'orienter vers l'intérieur, selon la flèche F1.

Conformément à l'invention, en cas de défaillance du dispositif (21) de commande du braquage de la roue (2), on limite fortement, et de façon automatique la capacité de variation de l'angle de braquage de la roue (2) considérée.

En pratique, on préfère bloquer l'actionneur (8) qui est responsable du braquage d'une roue (2), afin d'éviter cette tendance naturelle au braquage vers l'intérieur.

Ainsi, et comme illustré à la figure 1, ce blocage peut par exemple intervenir en commandant la vanne by-pass (16) de telle manière que les deux chambres du vérin (8) se trouvent bouchées. Dans ce cas, le vérin (8) n'a plus la possibilité de se déplacer librement. Cependant, le blocage ne peut pas être total, on observe une légère fluctuation de cet angle de braquage, due aux fuites au sein du vérin (8). Ces fuites proviennent des efforts importants engendrés par le positionnement de la roue (2) dans une direction qui s'écarte légèrement de la trajectoire.

En pratique, la commande du blocage peut se faire de différentes manières, soit immédiatement après l'apparition de la défaillance, soit lorsque l'angle de braquage entre dans une plage prédéterminée dans laquelle on considère que les conditions de sécurité sont remplies pour que la trajectoire soit conservée jusqu'à l'arrêt du véhicule. En pratique, on pourra préférer que le blocage de l'angle de braquage se fasse pour une valeur d'angle de braquage nulle, correspondant à une trajectoire rectiligne, en ligne droite.

Ainsi, une unité de commande électronique (20) dédiée à la fonction de blocage peut recevoir des informations sur le bon fonctionnement des différents dispositifs (21, 22) de commande de braquage dédiée à chaque roue (2, 3).

Lorsque l'un de ces dispositifs (21, 22) est défaillant, l'unité (20) peut déterminer le blocage qu'il convient d'appliquer à la roue (2, 3) en question à partir d'une information représentative de l'angle de braquage de cette dernière. Cette information peut émaner d'un capteur associé au dispositif (21) de la commande de braquage de la roue (2) en question, soit émaner d'un capteur associé au dispositif (22) de la commande de braquage de l'autre roue (3). Il peut s'agir d'un capteur de position associé au vérin (8) du dispositif (21) de braquage défaillant. Il peut également s'agir d'une information relative au braquage de l'autre roue (3), à partir de laquelle il est possible d'utiliser l'angle de braquage de la roue défaillante (2), en tenant compte de la géométrie du parallélisme, et par exemple par l'intermédiaire des épures de Jeantaud.

Il ressort de ce qui précède que le procédé de commande de direction conforme à l'invention permet de limiter fortement, et de façon automatique la capacité de variation de l'angle de braquage d'une roue, lorsque son dispositif de commande devient défaillant, et est donc inactivé.

## Revendications

1. Procédé de commande de la direction d'un véhicule automobile, dans lequel l'angle de braquage de chaque roue (2, 3) est commandé indépendamment par un dispositif (21, 22) dédié à une roue (2, 3), **caractérisé en ce qu'**en cas de défaillance d'un des dispositifs (21, 22) de commande du braquage de l'une des roues, on empêche tout mouvement désordonné de la roue dont la commande n'est plus assurée en limitant de façon automatique la capacité de variation de l'angle de braquage de la roue (2, 3) considérée, sans liaison mécanique entre les deux roues.

2. Procédé de commande selon la revendication 1, **caractérisé en ce que** l'on bloque l'angle de braquage de la roue (2, 3) considérée.

3. Procédé de commande selon la revendication 2, **caractérisé en ce que** l'on bloque l'angle de braquage de la roue (2, 3) considérée dès l'apparition de la défaillance.

4. Procédé de commande selon la revendication 2, **caractérisé en ce que** l'on bloque l'angle de braquage de la roue (2, 3) considérée lorsque l'angle de braquage entre dans une plage prédéterminée.

5. Procédé de commande selon la revendication 4, **caractérisé en ce que** l'on bloque l'angle de braquage lorsque l'angle de braquage est voisin de 0°.

6. Procédé de commande selon la revendication 1, dans lequel chaque dispositif (21, 22) de commande de braquage comporte un actionneur hydraulique (8, 9) tel qu'un vérin, **caractérisé en ce qu'**en cas de défaillance du dispositif (21, 22) de commande du braquage, on bloque le piston du vérin en position fixe en fermant les circuits d'alimentation du vérin.

7. Procédé de commande selon la revendication 1 **caractérisé en ce qu'**on agit sur l'angle de braquage de la roue défaillante en appliquant un effort de freinage sur ladite roue.

## Claims

1. A method for controlling the direction of a motor vehicle whereby the steering angle of each wheel (2, 3) is independently controlled by a device (21, 22) dedicated to one wheel (2, 3), **characterised in that**, in the case of failure of one of said devices (21, 22) for control of the steering angle of one of the wheels, uncontrolled movement of the wheel that is no longer controlled is prevented by automatically limiting the degree of variation in steering angle of the wheel (2, 3) in question without any mechanical linkage between the two wheels.

2. A control method as claimed in claim 1, **characterised in that** the steering angle of the wheel (2, 3) in question is locked.

3. A control method as claimed in claim 2, **characterised in that** the steering angle of the wheel (2, 3) in question is locked as soon as the failure occurs.

4. A control method as claimed in claim 2, **characterised in that** the steering angle of the wheel (2, 3) in question is locked when the steering angle falls within a predetermined range.

5. A control method as claimed in claim 4, **characterised in that** the steering angle is locked when the steering angle approaches 0°.

6. A control method as claimed in claim 1, whereby each steering-angle control device (21, 22) comprises a hydraulic actuator (8, 9) such as a cylinder, **characterised in that**, in the case of failure of steering-angle control device (21, 22), the piston of the cylinder is locked in a fixed position by closing the cylinder's supply circuits.

7. A control method as claimed in claim 1, **characterised in that** the steering angle of the faulty wheel is influenced by applying a braking force to said wheel.

## Patentansprüche

1. Verfahren zur Steuerung der Lenkung eines Kraftfahrzeugs, wobei der Einschlagwinkel eines jeden Rades (2, 3) durch eine, einem Rad (2, 3) zugeteilte Vorrichtung (21, 22) unabhängig gesteuert wird,
**dadurch gekennzeichnet, dass**
im Falle des Ausfalls einer der Vorrichtungen (21, 22) zur Steuerung des Einschlags eines der Räder jegliche nicht ordnungsgemäße Bewegung des Rads, dessen Steuerung nicht mehr sichergestellt ist, verhindert wird, indem die Fähigkeit zur Veränderung des Einschlagwinkels des betreffenden Rads (2, 3) automatisch eingeschränkt wird, ohne mechanische Verbindung zwischen den zwei Rädern.

2. Verfahren nach Anspruch 1, **dadurch gekennzeichnet, dass** der Einschlagwinkel des betreffenden Rads (2, 3) blockiert wird.

3. Verfahren nach Anspruch 2, **dadurch gekennzeichnet, dass** der Einschlagwinkel des betreffenden Rads (2, 3) ab dem Auftreten des Ausfalls blockiert wird.

4. Verfahren nach Anspruch 2, **dadurch gekennzeichnet, dass** der Einschlagwinkel des betreffenden Rads (2, 3) blockiert wird, wenn der Einschlagwinkel in einen vorbestimmten Bereich eintritt.

5. Verfahren nach Anspruch 4, **dadurch gekennzeichnet, dass** der Einschlagwinkel blockiert wird, wenn der Einschlagwinkel annähernd 0° beträgt.

6. Verfahren nach Anspruch 1, wobei jede Vorrichtung (21, 22) zur Steuerung des Einschlags ein hydraulisches Stellglied (8, 9), wie einen Zylinder, umfasst, **dadurch gekennzeichnet, dass** im Falle des Ausfalls der Vorrichtung (21, 22) zur Steuerung des Einschlags, der Kolben des Zylinders in einer feststehenden Stellung blockiert wird, indem die Versorgungskreisläufe des Zylinders geschlossen werden.

7. Verfahren nach Anspruch 1, **dadurch gekennzeichnet, dass** auf den Einschlagwinkel des ausgefallenen Rads eingewirkt wird, indem eine Bremskraft an das Rad angelegt wird.
